Europäisches Patentamt

European Patent Office

Office européen des brevets

(19)

(11) Publication number: **0 098 128**
A1

# (12) EUROPEAN PATENT APPLICATION

(21) Application number: 83303674.2

(22) Date of filing: 24.06.83

(51) Int. Cl.³: **B 60 K 5/12**
F 16 F 9/10

(30) Priority: 25.06.82 GB 8218512

(43) Date of publication of application:
11.01.84 Bulletin 84/2

(84) Designated Contracting States:
DE FR IT NL SE

(71) Applicant: DUNLOP LIMITED
Dunlop House Ryder Street St. James's
London SW1Y 6PX(GB)

(72) Inventor: Randell, William Francis
56 Hextall Road
Leicester, LE5 6AF(GB)

(74) Representative: Waller, Roy Ernest Sykes et al,
Group Patent Department Dunlop Limited 2 Parade
Sutton Coldfield West Midlands B72 1PF(GB)

(54) Improvements in or relating to resilient mountings.

(57) A resilient mounting (1) comprises main (2) and auxiliary (3) fluid chambers between which a restricted flow of damping fluid can take place in use of the mounting (1). The auxiliary chamber (3) is detected at least in part by a flexible membrane (9) of convoluted profile in the unloaded condition such that fluid displaced from the main chamber (2) is accommodated without stretching the membrane (9). Preferably the membrane (9) is formed in a first profile corresponding to that which it adopts in the static load condition and is deflected to said convoluted profile in the unloaded condition. Preferably the membrane (9) is also convoluted in the first profile so that fluid displaced due to both the static load and dynamic working loads is accommodated without stretching the membrane (9). The avoidance of tensile stresses in the membrane (9) improves the fatigue life thereof.

FIG.1

EP 0 098 128 A1

0098128

# IMPROVEMENTS IN OR RELATING TO RESILIENT MOUNTINGS

This invention concerns improvements in or relating to resilient mountings for connecting two components which are movable relative to each other and in particular, though not exclusively, to a resilient mounting for mounting a motor vehicle engine.

According to the present invention a resilient mounting for connecting two components which are movable relative to each other comprises main and auxiliary fluid chambers which in use of the mounting contain a damping fluid between which a restrictive flow of fluid can take place upon relative movement between said components wherein the auxiliary chamber is defined at least in part by a flexible membrane of convoluted profile in the unloaded condition.

The provision of the flexible membrane of convoluted profile in the unloaded condition of the mounting enables fluid displaced from the main chamber to be accommodated by unfolding of the membrane to increase the volume of the auxiliary chamber up to a predetermined limit without stretching the membrane and thereby not subjecting it to high tensile stresses.

Preferably the membrane is constructed to accommodate the fluid displaced from the main chamber under the static load and more preferably the volume displaced under both the static load and the dynamic loads encountered in use without any significant stretching thereof.

Preferably the main and auxiliary chambers are separated by a partition wall which may be rigid or flexible and which contains one or more throttling apertures for controlling the flow of fluid between the chambers.

Preferably the auxiliary chamber is contained within a rigid inner support member which is adapted for connection to one of the two components to be connected.

2. 0098128

Preferably the main chamber is defined at least in part by an elastomeric spring which acts between an external surface of the inner support member and an inner surface of an outer support member which is adapted for connection to the other of the two components to be connected. Preferably said external and internal surfaces are of frusto-conical shape.

Preferably the partition wall is positioned at the inner end of the inner support member.

The flexible membrane may be annular having a centre region thereof deflected towards the partition wall in the unloaded condition and movable away from the partition wall to increase the volume of the auxiliary chamber. The membrane may have other convoluted constructions in the unloaded condition so as to provide an auxiliary chamber the volume of which is variable.

Preferably the membrane, inner support member, spring and outer support member are formed as an integral fully bonded unit. Preferably the membrane as moulded has a profile substantially similar to that which it adopts under static loading of the mounting and is deflected to a convoluted profile in the unloaded condition. As a result when the mounting is installed and subjected to the static load it reverts substantially to its as moulded profile and is therefore substantially free of tensile stresses. Preferably the membrane as moulded is of convoluted profile to enable the volume contained therein to be increased beyond the as moulded volume without stretching the membrane. For example the membrane may be generally cup-shaped as moulded with a recessed or concave portion in the base.

Preferably the inner and outer support members are provided with respective end plates having means for attachment to the components. Conveniently the end plate attached to the outer support member completes the main fluid chamber and the end plate
attached to the inner support member forms a space
within the inner member on the opposite side of the
membrane to the auxiliary chamber. Such space may
have a volume in the unloaded condition of the
mounting substantially equal to the amount by which
the auxiliary chamber may increase in volume without
stretching the membrane thereby providing a positive
limit to deflection of the membrane. The space may
be closed or open to atmosphere.

The invention will now be described in more
detail, by way of example only, with reference to
the accompanying drawings wherein:-

Figure 1 shows in vertical section a mounting
according to the present invention in
the unloaded condition;

Figure 2 shows in vertical section a fully
bonded unit forming part of the
mounting shown in Figure 1; and

Figure 3 shows in vertical section the mounting
of Figure 1 in the static loaded
condition.

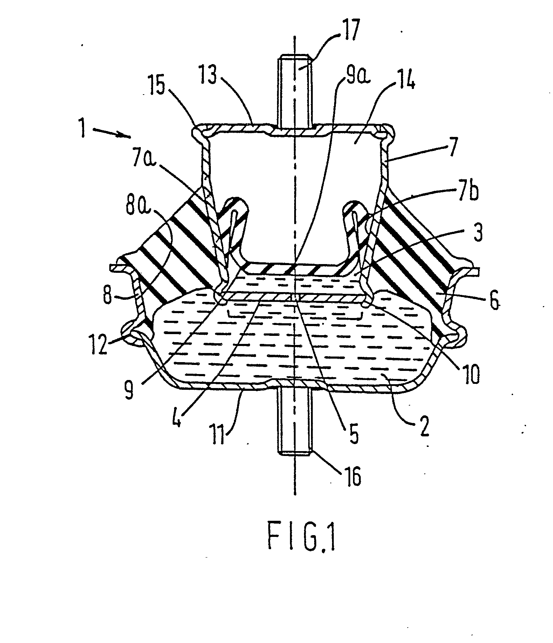

The resilient mounting 1 shown in Figure 1 of
the accompanying drawings comprises main and
auxiliary fluid chambers 2 and 3 respectively each
containing hydraulic damping fluid, e.g. silicone,
and separated by a rigid partition wall 4 having a
central aperture 5 to permit a restricted flow of
damping fluid between the chambers 2,3.

Main chamber 2 is defined at least in part
by an annular rubber spring 6 acting between and
bonded to confronting external and internal frusto-
conical surfaces 7a and 8a respectively of rigid
inner and outer support members 7 and 8 and auxiliary
chamber 3, contained within the inner support member
7, is defined at least in part by an annular rubber
membrane 9 bonded at the peripheral edge thereof to
the internal frusto-conical surface 7b of the inner

4.                                    0098128

support member 7.

The rigid partition wall 4 separating the main and auxiliary chambers is positioned at the narrower inner end of the internal support member 7 and secured by deforming the end of the support member 7 to form an annular groove 10 in which the peripheral edge of the partition wall 4 is received.

An annular end plate 11 positioned at the narrower outer end of the outer support member 8 completes the main chamber 2 and is secured by deforming the end of the support member 8 to form an annular groove 12 in which the peripheral edge of the end plate 11 is received.

An annular end plate 13 positioned at the wider outer end of the inner support member 7 forms a space 14 within the support member 7 and is secured by deforming the end of the support member 7 to form an annular groove 15 in which the peripheral edge of the end plate 13 is received. Space 14 is open to atmosphere through one or more apertures (not shown) formed in end plate 13.

Each end plate 11 and 13 is provided with an integral axial extending shank 16 and 17 respectively which is externally threaded for securing each end plate to a respective one of two components to be connected.

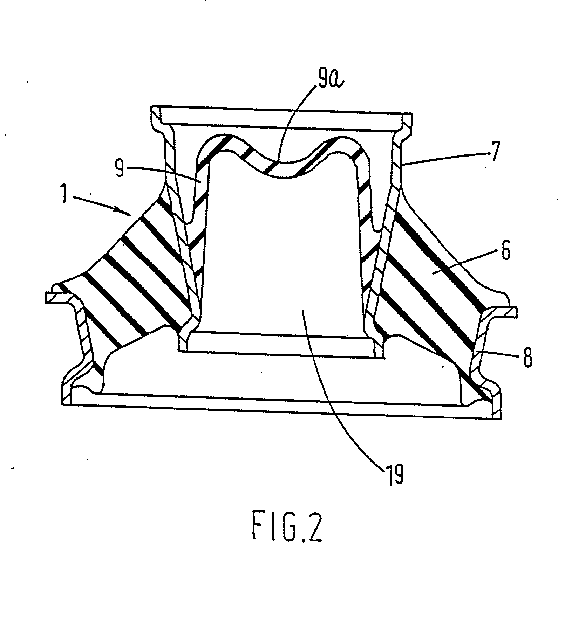

Referring now to Figure 2 there is shown an integral fully bonded unit 18 consisting of the membrane 9, inner support member 7, spring 6 and outer support member 8 to which the partition wall 4 and end plates 11 and 13 may subsequently be attached by deforming the end portions of the supporting members as above described.

In the as moulded condition of unit 18 membrane 9 has a generally cup-shaped profile in which base 9a is adjacent the outer end of the inner support member. The internal volume 19 defined by the membrane 9 which in use contains the damping fluid is less than the internal volume of the inner support member and the centre region of the base 9a is of recessed or concave profile such that the centre region may deflect in use to increase the internal volume 19 beyond the as moulded volume without greatly stretching the membrane and therefore without generating significant tensile stresses therein.

On assembly membrane 9 is deflected from its as moulded profile to the convoluted profile shown in Figure 1 in which base 9a is adjacent to the inner end of the inner support member by applying a predetermined axial load to one of the support members to compress spring 6 and reduce the volume of main chamber 2 prior to the introduction of the damping fluid through a suitable inlet (not shown) in end plate 11. As a result on releasing the axial load spring 6 returns to its original shape increasing the volume of main chamber 2 and damping fluid is drawn from the auxiliary chamber into the main chamber simultaneously deflecting the membrane 9 from its as moulded profile to the convoluted profile shown in Figure 1.

In use of the mounting, for example as a resilient mounting for a vehicle engine in which end plate 13 is secured to the vehicle engine (not shown) and end plate 11 is secured to the vehicle body (not shown) or vice versa relative axial movement between the inner and outer support members such as to compress spring 6 simultaneously reduces the volume of the main chamber 2 and forces damping fluid through the throttling aperture 5 in the partition wall 4 into the auxiliary chamber 3 where it is accommodated by deflection of the membrane 9 to increase the volume of the auxiliary chamber 3.

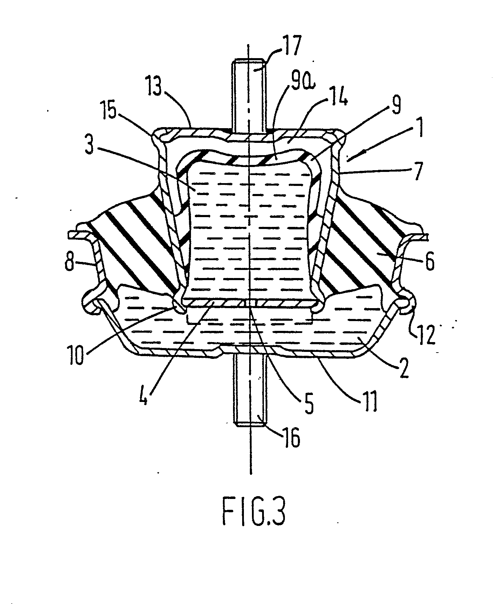

In a preferred arrangement the mounting 1 above described is constructed so that under static loading of the mounting the volume of damping fluid forced through the aperture 5 into the auxiliary chamber 3, deflects the membrane 9 to the position shown in Figure 3 in which the membrane has a profile substantially similar to that in the as moulded condition of the unit 18 shown in Figure 2. As a result tensile stress levels generated in the membrane 9 are kept to a minimum under static loading.

Furthermore it is to be noted from Figure 3 that the base 9a of membrane 9 is still of recessed or concave profile under static loading such that deflection of membrane 9 may occur to increase further the volume of the auxiliary chamber to accommodate fluid forced through the aperture 5 due to variations in the dynamic loads produced by vibrational movement of the engine without significantly stretching the membrane. As a result tensile stress levels generated in the membrane 9 are also kept to a minimum under dynamic loading.

It will be readily appreciated from the foregoing that the provision of a membrane having a convoluted profile in the unloaded condition which is capable of accommodating displaced fluid without being significantly stretched not only improves the fatigue life of the membrane by avoiding high tensile stressing thereof but also enables maximum use to be made of the space available in the inner support member for containing fluid displaced from the main chamber since the inner support member does not have to have an internal volume significantly greater than the as moulded volume of the membrane to allow stretching of the latter under both static and dynamic loads to increase the volume of the auxiliary chamber.

Finally it will be understood the invention is not restricted to the mounting or method of assembly above described which may be modified in a number of ways. For example, the membrane 9 may have any convoluted profile, e.g. a bellows type profile, which enables the volume of the auxliary chamber to be varied without significantly stretching the membrane.
The deflection of the membrane from its moulded
profile on assembly may be such that it reverts
substantially to its as moulded profile under any
desired applied load e.g. the static load as above
described, the maximum static and dynamic load to
which it may be subjected in use or any intermediate
load.   The increase in volume of the auxiliary chamber
which may occur without significantly stretching the
membrane  may be controlled either by ensuring the
volume of space 14 does not greatly exceed such
increase in volume or by  providing an end stop to
limit axial movement between the support members such
that the volume of fluid displaced from the main
chamber does not greatly exceed such increase in
volume.   The partition wall 4 may have more than one
throttling aperture 5 and the or each aperture may be
constructed to provide any required damping characteristic.   Further the partition wall 4 may be rigid as
described or flexible and may be fixed as described
or mounted for movement relative to the inner support
member in known manner.   The support members 7,8
may be made from metal or any other suitable material
e.g. reinforced plastics.   Similarly spring 6 and
membrane 9 may be made from any elastomeric material
compatible with the damping fluid which may also be
of any known type.   The required convoluted profile
for membrane 9 in the unloaded condition of the
mounting may be achieved by methods other than the
preloading of the mounting above described.   For
example with end plate 11 unattached the membrane
may be deflected to the required profile by a former
prior to introducing the damping fluid.   The rubber
spring 6 may contain a reinforcement e.g. one or more
metal plates or other substantially inextensible
material.   The inner and/or outer members 7 and 8 may
be adapted for connection to a component by means
other than shanks 16 and 17 e.g. end plates 11 and 13

0098128

may be adapted to include holes or studs for attaching the end plate to a component.

CLAIMS:

1. A resilient mounting (1) for connecting two components which are movable relative to each other comprises main and auxiliary fluid chambers (2,3) which in use of the mounting (1) contain a damping fluid between which a restricted flow of fluid can take place upon relative movement between said components characterised in that the auxiliary chamber (3) is defined at least in part by a flexible membrane (9) of convoluted profile in the unloaded condition.

2. A mounting according to Claim 1 characterised in that the membrane (9) is constructed and arranged to accommodate fluid displaced from the main chamber (2) up to a predetermined load, e.g. the static load, without any significant stretching of the membrane (9).

3. A mounting according to Claim 2 characterised in that the membrane (9) as formed has a profile different to the convoluted profile adopted in the unloaded condition whereby the membrane (9) returns substantially to its as formed profile under said predetermined load.

4. A mounting according to any one of the preceding claims characterised in that the auxiliary chamber (3) is contained within a rigid inner support member (7) adapted for connection to one of the two components to be connected.

5. A mounting according to Claim 4 characterised in that the main chamber (2) is defined at least in part by an elastomeric spring (6) which acts between an external surface (7a) of the inner support member (7) and an internal surface (8a) of an outer support member (8) adapted for connection to the other of the two components to be connected, and said internal and external surfaces (7a,8a) are optionally of frusto-conical profile.

6. A mounting according to Claim 5 characterised in that the inner and outer support members (7,8), elastomeric spring (6) and membrane (9) are formed as an integral fully bonded unit (18).

7.    A mounting according to any one of the preceding claims characterised in that the main and auxiliary chambers (2,3) are separated by a partition wall (4) constructed and arranged to control the flow of fluid between the chambers (2,3), for example the partition wall (4) may have at least one aperture (5) therein for the passage of damping fluid between the chambers (2,3).

8.    A mounting according to any one of the preceding claims characterised in that means (13) is provided to prevent the fluid displaced from the main chamber (2) to the auxiliary chamber (3) exceeding a predetermined value.

9.    A resilient mounting (1) for connecting two components which are movable relative to each other comprises main and auxiliary fluid chambers (2,3) which in use of the mounting (1) contain a damping fluid between which a restricted flow of fluid can take place upon relative movement between said components characterised in that the auxiliary chamber (3) is defined at least in part by a flexible membrane (9) which is formed in a first profile corresponding to the profile adopted at a predetermined load condition, e.g. the static load, and is deflected to a second, convoluted profile in the unloaded condition such that in use of the mounting (1) the membrane (9)reverts to its as formed first profile at said predetermined load condition.

10.    A mounting according to Claim 9 characterised in that said membrane (9) is formed in convoluted profile.

1/5

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 274 833 (LORD)<br><br>* Page 2, line 7 - page 6, line 12; figures 1-5 * | 1-5,7- 10 | B 60 K 5/12<br>F 16 F 9/10 |
| | --- | | |
| X | DE-A-2 932 478 (FREUDENBERG)<br>* Whole document * | 1-7,9 | |
| | --- | | |
| A | EP-A-0 053 401 (NISSAN MOTOR CIE.)<br><br>* Page 6, line 23 - page 17, line 16; figures 2-4 * | 1,2,4 5,7,9 10 | |
| | --- | | |
| A | EP-A-0 042 911 (BOGE) | | |
| | --- | | |
| A | GB-A-2 033 534 (GOULD) | | |
| | --- | | |
| A | FR-A-2 475 172 (BRIDGESTONE) | | |
| | --- | | |
| A | FR-A-2 472 116 (CONTINENTAL GUMMI WERKE) | | |
| | --- | | |
| A | DE-A-3 016 421 (PHOENIX) | | |
| | ----- | | |

TECHNICAL FIELDS
SEARCHED (Int. Cl. ³)

B 60 K
F 16 F

The present search report has been drawn up for all claims

| Place of search | Date of completion of the search | Examiner |
|---|---|---|
| THE HAGUE | 21-09-1983 | ESPEEL R.P. |